# EUROPÄISCHE PATENTSCHRIFT

(11) **EP 0 373 307 B1**
(45) Veröffentlichungstag und Bekanntmachung des Hinweises auf die Patenterteilung: **04.05.1994**
(21) Anmeldenummer: 89117726.3
(22) Anmeldetag: 26.09.1989
(51) Int. Cl.: F16C 11/04, B60G 7/00

(54) **Gelenklager, insbesondere für die Lagerung eines Achslenkers eines Kraftfahrzeugs**
Pivot bearing, especially for the axle pivot steering of a motor vehicle
Articulation, en particulier pour la bielle d'asservissement des essieux d'un véhicule à moteur

(30) Priorität: 14.12.1988 DE 3842003
(43) Veröffentlichungstag der Anmeldung: 20.06.1990
(73) Patentinhaber: Jörn GmbH, D-70736 Fellbach (DE)
(72) Erfinder: Zawadzki, Bernd, Dipl.-Ing., D-7054 Korb (DE)
(74) Vertreter: Neubauer, Hans-Jürgen, Dipl.-Phys.

(56) Entgegenhaltungen:
- AT-B- 287 407
- FR-A- 1 545 474
- FR-A- 2 173 397
- FR-A- 2 385 936
- GB-A- 2 202 923

## Beschreibung

Die Erfindung betrifft ein Gelenklager, insbesondere für die Lagerung eines Achslenkers eines Kraftfahrzeugs nach dem Oberbegriff des Anspruchs 1.

Ein allgemein bekanntes und üblicherweise verwendetes Gelenklager zur Verbindung eines Achslenkers mit dem Kraftfahrzeugaufbau besteht aus einem länglichen, inneren Lagerteil, das mit dem Fahrzeugaufbau über Lagerarme verschraubt ist. Dieses Lagerteil hat in einem mittleren bereich eine ballige, kugelförmige Verdickung mit einem bestimmten Radius.

Arf dieser so gebildeten Kugelfläche liegen Kunststoff-Gleitelemente mit entsprechend geformten Gleitflächen, die in einem Metallgehäuse gehalten sind. Das Metallgehäuse umfaßt somit mit den eingelagerten Kunststoff-Gleitelementen die Kugelform, wodurch sich eine kugelgelenkartige Ausbildung ergibt und das Metallgehäuse in bestimmten Grenzen in allen Raumrichtungen gegenüber dem inneren Lagerteil verschwenkbar ist. Mit dem Metallgehäuse ist der Achslenker verbunden.

Zwangsläufig ergeben sich bei einer solchen Ausführung Spalte zwischen dem ersten Lagerteil und den Stirnseiten des Metallgehäuses sowie frei liegende Kugel-Gleitflächen zu den Seiten des langgestreckten Metallteils hin. Diese Stellen sollen dadurch geschützt werden, daß an beiden Stirnseiten je ein ringförmiger Balg angebracht ist, der mit dem äußeren Rand mit dem Metallgehäuse und mit dem inneren Rand mit dem inneren Metallteil durch Federringe verbunden ist. Bei einer Relativbewegung zwischen dem Metallgehäuse verformen sich die beiden Bälge entsprechend.

Die Ausführungsform nach dem Stand der Technik ist aufwendig in der Herstellung und entsprechend teuer. Insbesondere ist es notwendig, genau bearbeitete Kugel-Gleitflächen herzustellen. Da die Kunststoff-Gleitelemente bei kardanischen Bewegungen in allen Richtungen auf der Kugeloberfläche gleiten, ist es erforderlich, diese Kugel-Gleitflächen in allen Raumrichtungen mit möglichst geringen Toleranzen herzustellen und zu bearbeiten.

Ein weiterer Nachteil besteht darin, daß die verwendeten Kunststoff-Gleitelemente praktisch keine elastischen Eigenschaften haben. Einerseits werden dadurch die Kräfte zwischen den Lagerteilen, insbesondere auch auf die Kunststoff-Gleitelemente, ohne Dämpfung mit allen Kraftspitzen direkt übertragen, was die Lebensdauer ungünstig beeinflußt. Andererseits werden auch sehr kleine Relativbewegungen der Lagerteile jedesmal sofort in reibene Gleitbewegungen zwischen den Bauteilen umgesetzt, da praktisch keine Relativbewegung in einem Bauteil molekular aufgenommen wird. Zudem ist die Anbindung wegen der fehlenden Elastizität der Kunststoff-Gleitelemente sehr starr, was sich ungünstig auf die Fahrzeugakustik, die Geräuschbildung und die Geräuschübertragung auswirkt.

Der abdichtende Balg steht weit ausgewölbt an den Stirnseiten des Lagers vor und wird daher regelmäßig leicht beschädigt, wodurch reibende Partikel in das Lager eindringen können und dann das Lager schnell zerstört wird. Die Abdichtbälge werden lediglich mit Federringen gehalten und es hat sich gezeigt, daß dies für eine notwendig gute Dichtung nicht ausreichend ist. Beispielsweise können bei der Verwendung üblicher Hochdruck-Reinigungsgeräte durch den scharfen Wasserstrahl Schmutzpartikel und Wasser unter den Klemmringen hindurch in das Lagerinnere gedrängt werden, wodurch dann das Lager schnell unbrauchbar wird. Die Gummischicht des Balges kann durch auftretende Falten und Knicke auch betriebsmäßig stark belastet sein.

Es ist weiter eine zylindrische Gelenkbuchse für ein Gelenklager bekannt (AT-B-28 74 07), die aus einem zylindrischen metallischen Innenteil als erstes Lagerteil und einem Aufnahmeauge mit einer zylindrischen Bohrung als zweites Lagerteil besteht.

Zwischen dem Innenteil und dem Aufnahmeauge sind zwei antisymmetrisch geformte Buchsen aus Elastomer eingebracht, an deren äußeren Enden je ein Flansch angeformt ist. Die Buchsen sind als Gummi-Metall-Buchsen mit einvulkanisierten Zwischenblechen ausgeführt. Die Festlegung und Befestigung dieses Gelenklagers erfolgt mit Hilfe von seitlich an den Flanschen anliegenden Druckringen, mit denen durch axiales Zusammenziehen die im nicht zusammengezogenen Zustand in der axialen Länge des Aufnahmeauges vorstehenden zwei Buchsen axial gegeneinander vorgespannt werden. Dadurch wird der Gummi im Ringspalt zwischen dem Aufnahmeauge und dem zylindrischen Innenteil vorgespannt und verdrängt und die Flansche werden stirnseitig gegen Anlageflächen am Aufnahmeauge gepreßt. Durch diese Vorspannung im Gummi wird eine feste Anlageverbindung der Buchsenteile sowohl am Aufnahmeauge als auch am metallischen Innenteil geschaffen. Eine gleitende Verbindung ist hierbei weder möglich noch funktionsmäßig zulässig.

Alle Relativbewegungen zwischen den beiden Lagerteilen werden somit molekular im Gummi aufgenommen. Dies hat aber zur Folge, daß nur relativ geringe kardanische Bewegungen und insbesondere Schwenkbewegungen um die Längsachse der Gelenkbuchse aufgenommen werden können, was für den Einsatz zur Lagerung des Achslenkers an einem Kraftfahrzeug nicht ausreichend sein kann.

Da in dieser Gelenkbuchse nach dem Stand der Technik alle Relativbewegungen ohne gleitende Bewegungen im Gummi molekular aufgenommen werden und das Lager wegen der festen Anlageverbindungen ohnehin abgedichtet ist, ist es hier nicht notwendig, Maßnahmen für eine stirnseitige Abdichtung vorzusehen.

Mit einer Gelenkbuchse nach dem Stand der Technik werden mit zunehmenden Auslenkungen bzw. Relativbewegungen große Rückstellkräfte erzeugt, die beispielsweise das Lenkverhalten eines Achslenkers ungünstig beeinflussen können und daher unerwünscht sind.

Ausgehend von dem zuletzt beschriebenen Stand der Technik eines Gelenklagers mit Gelenkbuchse wird die Aufgabe der Erfindung darin gesehen, ein gattungsgemäßes Gelenklager so weiterzubilden, daß Auslenkungen um die Lagerachse mit nur geringen Rückstellkräften möglich sind und das Lager eine hohe Dauerhaltbarkeit aufweist.

Diese Aufgabe wird mit den kennzeichnenden Merkmalen des Anspruchs 1 gelöst.

Gemäß Anspruch 1 weisen die beiden antisymmetrischen Buchsen mit den endseitigen Flanschen je ein inneres Gleitrohr auf, das jeweils gleitbar auf das zylindrische Innenteil aufgesetzt ist und das mit einer äußeren Elastomerschicht fest verbunden ist. Auch die jeweils endseitigen, seitlichen Anlageflächen der beiden Flansche der auf das Innenteil aufgesteckten Buchsen sind als Gleitflächen ausgebildet, wobei diese ebenfalls mit dem Elastomerbereich des jeweiligen Flansches unverdrehbar verbunden sind. Damit sind die antisymmetrischen Buchsen sowohl gegenüber dem inneren Metallteil als auch über die seitlichen Gleitflächen gegenüber seitlichen Anlagen gleitfähig und verdrehbar.

An jeder der seitlichen Gleitflächen liegt eine erste Scheibe aus festem Material an, die in Radialrichtung mit einem Überstand über den jeweiligen Flansch übersteht und an dieser Scheibe der Druckring zur Aufbringung der Vorspannung anliegt.

Es ist weiter eine zweite Scheibe aus festem Material vorgesehen, die zwischen dem jeweiligen Flansch und der Anlagefläche am Aufnahmeauge unverdrehbar eingebracht ist. Diese Scheibe kann hier durch Einklemmen gehalten sein oder direkt fest mit dem Flansch verbunden bzw. anvulkanisiert sein.

Zwischen den beiden Scheiben mit radialem Überstand gegenüber dem jeweiligen Flansch liegt ein ringförmiger Raum der mit einem Elastomermaterial als Dichtring zur Herstellung eines Dichtelements so ausgeführt ist, daß der Raum ringförmig geschlossen ist. Damit ist der Bereich der Flansche und der Gleitflächen von außen her geschützt und abgedichtet. Wasser, Staub, etc. können somit nicht an die Gleitflächen gelangen, so daß hier diese Stellen gegen erhöhten Verschleiß geschützt sind.

Der Dichtring zwischen den Scheiben liegt bevorzugt in einer konzentrischen Lage zum übrigen Lageraufbau. Aus Gewichtsgründen oder wegen einer speziellen Gestaltung des Einbauraums kann der Dichtring eine im Längsschnitt dachförmig angestellte bzw. konische Lage einnehmen. Mit den vorstehenden Maßnahmen wird eine zuverlässige Abdichtung des Lagers erhalten, wobei das Lager selbst weitgehend rückstellfrei ist, da eine gleitende Verdrehung im Dichtring aufgenommen wird und dieser nur geringe Rückstellkräfte aufweist.

Vorteilhaft werden die Elastomer-Teile aus Gummi wegen dessen guter Verarbeitungsmöglichkeit und Haltbarkeit hergestellt (Anspruch 2).

Nach Anspruch 3 wird das Gleitrohr über dem inneren Metallteil aus Kunststoffmaterial hergestellt ebenso wie die Gleitflächen an den Flanschen von Kunststoffscheiben gebildet sind, wobei diese fest mit dem Flansch verbunden bzw. anvulkanisiert sind. Durch die zwischen dem Aufnahmeauge und dem Innenteil über das Elastomermaterial aufgebrachte Vorspannung wird auch das Gleitrohr aus Kunststoffmaterial, das bevorzugt gewisse Fließeigenschaften aufweist, fest auf das metallische Innenteil gepreßt. Dadurch kann an dieser Gleitfläche kein unerwünschtes Spiel entstehen. Die gleiche Situation ergibt sich an den seitlichen Kunststoffscheiben.

Nach Anspruch 4 ist es zweckmäßig, die erste und zweite Scheibe, zwischen denen der Dichtring gehalten ist, aus festem, metallischen Material herzustellen.

Wegen der Fließeigenschaften der seitlich als Gleitflächen angeordneten Kunststoffscheiben ist es nach Anspruch 5 vorteilpaft, die erste, seitlich äußere Scheibe mit einer ringförmigen Ausnehmung zu versehen, in die eine Kunststoffscheibe Iaßt bzw. wo sie radial eingefaßt ist. Durch diese Maßnahme kann das Kunststoffmaterial der Kunststoffscheibe nicht in Radialrichtung unter den hohen aufgebrachten Drücken wegfließen.

Mit den Merkmalen des Anspruchs 6 wird vorgeschlagen, das Dichtelement aus den beiden Scheiben und dem dazwischenliegenden Dichtring einstückig mit der jeweiligen Buchse dadurch herzustellen, daß die zweite Scheibe mit dem Flansch fest verbunden bzw. anvulkanisiert ist. Dies hat den Vorteil, daß das Dichtelement an der zugehörigen Buchse von vornherein befestigt ist und nicht bei der Montage als separates Teil gehandhabt werden muß. Bei dieser Ausführung kann es aber Probleme bei der Herstellung, insbesondere Entformung, geben. Es ist daher auch möglich, das Dichtungselement aus den beiden Scheiben und dem Dichtring als separates Teil herzustellen und die zweite Scheibe zwischen dem Flansch und der entsprechenden, stirnseitigen Anlagefläche des Aufnahmeauges beim Zusammenziehen einzupressen und zu halten.

Eine Vereinfachung bei der Herstellung und bei der Montage ist mit den Merkmalen des Anspruchs 7 zu erreichen. Dabei ist die erste, seitlich außenliegende Scheibe radial in eine innere und äußere Scheibe geteilt. Die äußere Scheibe ist mit dem Dichtring verbunden bzw. anvulkanisiert und weist einen Überstand radial nach innen auf. Der Dichtring ist, wie auch bei den anderen Ausführungsformen, ebenfalls mit der zweiten Scheibe fest verbunden bzw. anvulkanisiert, wobei die Scheibe am Flansch anvulkanisiert sein kann oder zwischen dem Flansch und der stirnseitigen Anlagefläche des Aufnahmeauges durch den Druck auf den Flansch gehalten ist.

An der inneren Scheibe ist die Gleitfläche für die anliegende Flanschgleitfläche bzw. der Kunststoffscheibe gebildet, wobei der innere Überstand der äußeren Scheibe von einem äußeren Rand der inneren Scheibe hintergriffen wird.

Der jeweilige Druckring erstreckt sich in radialer Richtung soweit, daß er diesen überlappenden Bereich der inneren und äußeren Scheibe überdeckt. Beim Aufbringen der Vorspannung wird damit die äußere Scheibe zwischen dem Rand der inneren Scheibe und dem Druckring eingespannt und gehalten.

Für eine gute Dimensionierung und Anpassung an die vorliegenden Gegebenheiten kann es nach Anspruch 8 vorteilhaft sein, sowohl im Elastomerbereich des Flansches als auch im Längsbereich der Buchsen Zwischenbleche einzuformen.

Anhand eines Ausführungsbeispiels wird die Erfindung mit weiteren Einzelheiten, Merkmalen und Vorteilen näher erläutert.

Die einzige Fig. zeigt eine Seitenansicht mit einem teilweisen Längsschnitt durch ein fertig montiertes Gelenklager.

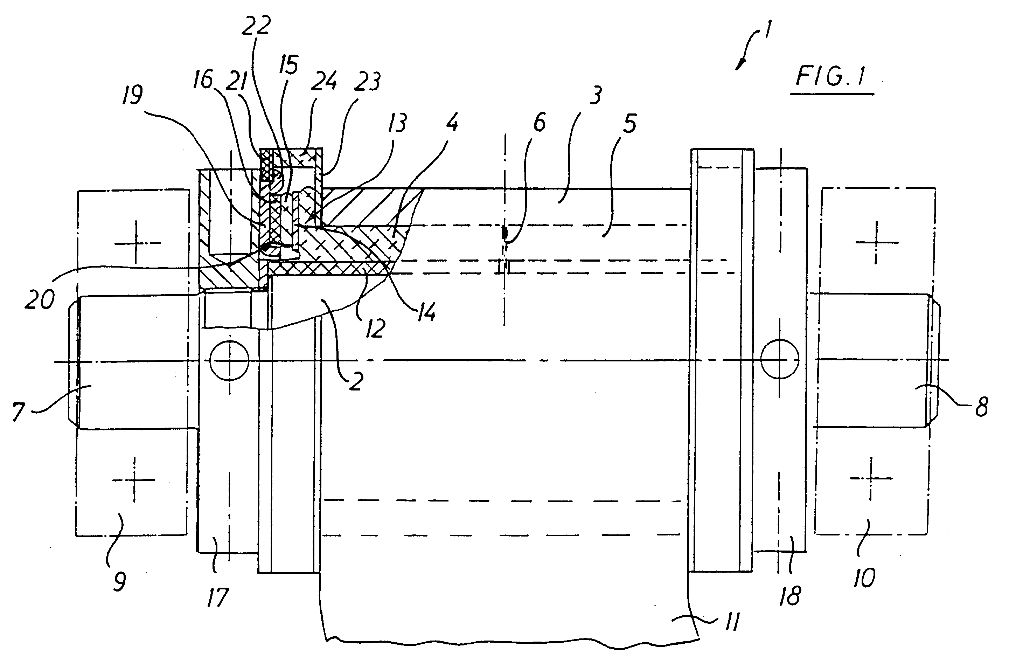

In Fig. 1 ist ein Gelenklager 1 eines Kraftfahrzeugs dargestellt. Das Gelenklager 1 besteht aus einem metallischen Innenteil 2, einem Aufnahmeauge 3 und dazwischen unter Vorspannung eingespannten zwei antisymmetrischen, auf das Innenteil aufgesteckten Gummi-Metall-Buchsen 4, 5, die von beiden Seiten her aufgesteckt sind und mit Stirnseiten 6 etwa in einer mittleren Radialebene aneinanderliegen.

Das zylindrische, innere Metallteil 2 trägt seitlich Befestigungsarme 7, 8, die mit Schellen 9, 10 für die Lagerung eines Achslenkers am Kraftfahrzeugaufbau befestigt sind. Das Aufnahmeauge 3 mit seiner zylindrischen Bohrung setzt sich in dem teilweise dargestellten Achslenker 11 fort.

Die beiden Gummi-Metall-Buchsen 4, 5 sind an ihrer radialen Innenseite jeweils mit einem Gleitrohr 12 aus Kunststoffmaterial durch Vulkanisation verbunden, d.h. das Gleitrohr 12 ist einerseits gleitbar auf dem inneren Metallteil 2 gelagert und andererseits fest mit dem Gummi der Gummi-Metall-Buchsen 4, 5 verbunden.

Die Stirnseiten der Gummi-Metall-Buchsen 4, 5 sind als Flansche 13 ausgebildet, wobei im Gummimaterial eine Zwischenblechscheibe 14 einvulkanisiert ist.

An der äußersten Flanschgummischicht 15 ist eine Kunststoffscheibe 16 mit einer äußeren stirnseitigen Gleitfläche anvulkanisiert.

Seitlich ist an jeder Seite ein Anlage- bzw. Druckring 17, 18 angebracht, mit dem z.B. durch Aufschrauben ein axialer Druck auf den Bereich der Flansche 13 und auf den zylindrischen Teil der Gummi-Metall-Buchsen 4, 5 aufgebracht werden kann.

Zwischen der Anlagefläche des Druckrings 17 (und entsprechend gleich ist der Aufbau auf der gegenüberliegenden Seite) und der Kunststoffscheibe 16 liegt eine erste Metallscheibe 19, die radial innen und außen jeweils zur Lagerinnenseite hin aufgebogen ist, so daß eine ringförmige Ausnehmung 20 geschaffen ist, die die Kunststoffscheibe 16 radial begrenzt und das Kunststoffmaterial am Wegfließen hindert. Die Metallscheibe 19 ist durch einen weiteren, in der gleichen Radialebene liegenden, äußeren Scheibenteil 21 in Radialrichtung verlängert, wobei dieser äußere Scheibenteil durch eine entsprechende Randausbildung 22 von der Metallscheibe 19 hintergriffen und zwischen dem Druckring 17 und dem Rand 22 bzw. der Metallscheibe 19 gehalten ist. Um hier einen guten und dichten Halt zu erlangen, kann die Randausbildung 22 oder die äußere Scheibe 21 im Überlappungsbereich etwas elastisch gestaltet sein.

Eine zweite Metallscheibe 23 liegt zwischen dem Flansch 13 und der stirnseitigen Anlagefläche des Aufnahmeauges 3 und ist dort entweder als separates Bauteil eingespannt oder von vornherein mit dem Flansch 13 durch Vulkanisation verbunden.

Im Raum zwischen dem Überstand der Metallscheibe 23 und der äußeren Scheibe 21 ist ein Dichtring 24 aus Gummi einvulkanisiert.

Das dargestellte Gelenklager hat folgende Funktion:
Beim Aufbringen eines Drehmoments um die Längsachse des Gelenklagers 1 über einen mit dem Aufnahmeauge 3 verbundenen Achslenker 11 beim Einfedern des Kraftfahrzeugs werden geringe Auslenkungen molekular in der Gummischicht der Gummi-Metall-Buchsen 4, 5 aufgenommen. Bei größeren Auslenkungen wird das Kunststoff-Gleitrohr 12 gegenüber den Gleitflächen am Innenteil 2 verdreht. Dadurch erfolgt eine weitgehend rückstellkraftfreie Verbindung zwischen dem Innenteil 2 bzw. dem Fahrzeugaufbau und dem Achslenker. Die kardanischen Auslenkungen des Achslenkers werden in der zylindrischen Gummischicht der Gummi-Metall-Buchsen 4, 5 aufgenommen, wobei der Gummi im wesentlichen auf Schub belastet ist.

Die Stirnbereiche zwischen dem Innenteil 2 und dem Aufnahmeauge 3 bzw. den Druckringen 17, 18 und dem Aufnahmeauge 3 werden durch die Dichtungselemente aus den Scheiben 19, 21 und 23 mit dem einvulkanisierten Dichtring 24 sicher vor Umwelteinflüssen geschützt. Relativbewegungen der Lagerteile werden im jeweiligen Dichtring 24 molekular, ohne Knicke und Faltenbildung, aufgenommen.

Zusammenfassend wird festgestellt, daß mit der Erfindung ein Gelenklager vorgeschlagen wird, das insbesondere vorteilhaft die Anforderungen für die Lagerung eines Achslenkers eines Kraftfahrzeugs erfüllt.

## Patentansprüche

1. Gelenklager (1), insbesondere für die Lagerung eines Achslenkers eines Kraftfahrzeugs,
bestehend aus einem mit Befestigungsarmen (7, 8) versehenen, zylindrischen, metallischen Innenteil (2) (erstes Lagerteil),
aus zwei antisymmetrisch auf das Innenteil aufgesteckte Buchsen (4, 5) aus Elastomermaterial, an deren stirnseitigen Enden je ein Flansch (13) angeformt ist,
aus einem Aufnahmeauge (3) (zweites Lagerteil) mit einer zylindrischen Bohrung, mit der das Aufnahmeauge (3) über die zwei Buchsen (4, 5) geschoben ist und
aus seitlich an den Flanschen (13) anliegenden Anlage- bzw. Druckringen (17, 18), mit denen durch axiales Zusammenziehen die Befestigung der Buchsen (4, 5) dergestalt erfolgt, daß die im nicht zusammengezogenen Zustand in der axialen Länge des Aufnahmeauges (3) bzw. dessen zylindrischer Bohrung vorstehenden zwei Buchsen (4, 5) mit den Druckringen (17, 18) axial gegeneinander gespannt werden, wodurch das Elastomermaterial im Ringspalt zwischen dem Aufnahmeauge (3) und dem zylindrischen Innenteil (2) verdrängt und vorgespannt wird und die Flansche (13) gegen stirnseitige Anlageflächen am Aufnahmeauge (3) gepreßt werden,
dadurch gekennzeichnet,
daß die beiden Buchsen (4, 5) je ein inneres Gleitrohr (12) aufweisen, das je gleitbar auf das zylindrische Innenteil (2) aufgesteckt ist und auf das eine äußere Elastomerschicht fest aufgebracht ist,
daß die jeweils stirnseitigen Anlageflächen der beiden Flansche (13) der auf das Innenteil (2) aufgesteckten Buchsen (4, 5) als ebenfalls gleitbare Gleitflächen (Kunststoffscheiben 16) ausgebildet sind, die mit dem Elastomermaterial des jeweiligen Flansches (13) unverdrehbar verbunden sind,
daß an jeder solcher Gleitfläche (Kunststoffscheibe 16) je eine erste Scheibe (19, 21) aus festem Material seitlich mit einer Gleitfläche anliegt, die erste Scheibe in Radialrichtung mit einem Überstand (Scheibenteil 21) über den jeweiligen Flansch (13) übersteht und an dieser Scheibe (19, 21) der Anlage- bzw. Druckring (18, 17) zur Aufbringung der Vorspannung anliegt,
daß je eine zweite Scheibe (23) aus festem Material zwischen dem jeweiligen Flansch (13) und der stirnseitigen Anlagefläche am Aufnahmeauge (3) unverdrehbar eingebracht ist und auch die zweiten Scheiben (23) mit einem Überstand über den jeweiligen Flansch (13) radial überstehen, so daß zwischen den Überständen der ersten (Scheibenteil 21) und zugehörigen zweiten (23) Scheibe ein Raum gebildet ist,
daß in diesen Raum mit beiden Scheiben verbundenes Elastomermaterial als Dichtring (24) zur Herstellung eines Dichtelements eingebracht ist, so daß der Raum ringförmig geschlossen ist und somit jeweils der Bereich der Flansche (13) und der Gleitflächen von außen her geschützt und abgedichtet ist.

2. Gelenklager nach Anspruch 1, dadurch gekennzeichnet, daß das Elastomermaterial Gummi ist.

3. Gelenklager nach Anspruch 1 oder 2, dadurch gekennzeichnet, daß das Gleitrohr (12) aus Kunststoffmaterial und die seitlichen Gleitflächen an den Flanschen (13) Kunststoffscheiben (16) sind, die mit dem Flansch (13) fest verbunden sind.

4. Gelenklager nach einem der Ansprüche 1 bis 3, dadurch gekennzeichnet, daß die erste (19, 21) und zweite (23) Scheibe aus Metall hergestellt sind.

5. Gelenklager nach einem der Ansprüche 1 bis 4, dadurch gekennzeichnet, daß die erste Scheibe (19) eine ringförmige Ausnehmung (20) enthält, in der die Gleitfläche bzw. Kunststoffscheibe (16) am jeweiligen Flansch (13) beidseitig in Radialrichtung eingefaßt ist.

6. Gelenklager nach einem der Ansprüche 1 bis 5, dadurch gekennzeichnet, daß die zweite Scheibe (23) mit dem Flansch (13) und der Dichtring (24) mit der ersten (21) und zweiten Scheibe (23) fest verbunden bzw. anvulkanisiert sind.

7. Gelenklager nach Anspruch 6, dadurch gekennzeichnet, daß die erste Scheibe radial in eine innere (19) und äußere (21) Scheibe geteilt ist,
daß die äußere Scheibe (21) mit dem Dichtring (24) fest verbunden bzw. anvulkanisiert ist mit einem Überstand radial nach innen,
daß an der inneren Scheibe (19) die Gleitfläche für den Flansch (13) bzw. die Kunststoffscheibe (16) gebildet ist und der äußere Rand (22) der Scheibe (19) so ausgebildet ist, daß er den inneren Überstand der äußeren Scheibe (21) von der dem Druckring (17, 18) abgewandten Seite her hintergreift und
daß sich der Druckring (17, 18) in radialer Richtung soweit erstreckt, daß er diesen überlappenden Bereich mit seiner Druckfläche überdeckt, so daß beim Aufbringen der Vorspannung die äußere Scheibe (21) zwischen dem Rand (22) der inneren Scheibe (19) und dem Druckring (17, 18) eingespannt und gehalten ist.

8. Gelenklager nach einem der Ansprüche 1 bis 7, dadurch gekennzeichnet, daß im Flansch (13) und/oder im Längsbereich der Buchse (4, 5) Zwischenbleche (14) eingeformt sind.

## Claims

1. Pivot-joint bearing (1), in particular for the mounting of an axle link of a motor vehicle, comprising a cylindrical, metallic inner part (2) which is provided with fastening arms (7, 8) (first bearing part), comprising two bushes (4, 5) of elastomer material which are fitted asymmetrically onto the inner part and on the face ends of which there is a flange (13) formed in each case, comprising a receiving eye (3) (second bearing part) with a cylindrical bore, by which the receiving eye (3) is pushed over the two bushes (4, 5), and comprising locating and thrusting rings (17, 18) bearing laterally on the flanges (13), by which the fastening of the bushes (4, 5) is performed by axial compression such that the two bushes (4, 5) projecting in the uncompressed state in the axial length of the receiving eye (3) or the cylindrical bore of the latter are braced against each other by the thrusting rings (17, 18), whereby the elastomer material in the annular gap between the receiving eye (3) and the cylindrical inner part (2) is displaced and prestressed and the flanges (13) are pressed against end-face locating surfaces on the receiving eye (3), characterized in that the two bushes (4, 5) each have an inner sliding tube (12), which is in each case slidably fitted onto the cylindrical inner part (2) and on which an outer layer of elastomer is firmly applied, in that the locating surfaces respectively on the end faces of the two flanges (13) of the bushes (4, 5) fitted onto the inner part (2) are designed as likewise slidable sliding surfaces (plastic discs 16), which are nonrotatably connected to the elastomer material of the respective flange (13), in that on each such sliding surface (plastic disc 16) in each case a first disc (19, 21) of solid material bears laterally with a sliding surface, the first disc projects in the radial direction beyond the respective flange (13) with an overhang (disc part 21) and against this disc (19, 21) there bears the locating or thrusting ring (18, 17) for applying the prestress, in that in each case a second disc (23) of solid material is nonrotatably introduced between the respective flange (13) and the locating surface on the end face of the receiving eye (3), and also the second discs (23) project radially beyond the respective flange (13) with an overhang, so that a space is formed between the overhangs of the first disc (disc part 21) and the associated second disc (23), and in that elastomer material bonded to the two discs is introduced into this space as a sealing ring (24) for producing a sealing element, so that the space is annularly closed and consequently the region of the flanges (13) and of the sliding surfaces is in each case protected and sealed off from the outside.

2. Pivot-joint bearing according to Claim 1, characterized in that the elastomer material is rubber.

3. Pivot-joint bearing according to Claim 1 or 2, characterized in that the sliding tube (12) is of plastic material and the lateral sliding surfaces on the flanges (13) are plastic discs (16) which are firmly bonded to the flange (13).

4. Pivot-joint bearing according to one of Claims 1 to 3, characterized in that the first disc (19, 21) and second disc (23) are produced from metal.

5. Pivot-joint bearing according to one of Claims 1 to 4, characterized in that the first disc (19) contains an annular recess (20), in which the sliding surface or plastic disc (16) on the respective flange (13) is enclosed on both sides in the radial direction.

6. Pivot-joint bearing according to one of Claims 1 to 5, characterized in that the second disc (23) is firmly bonded to or vulcanized onto the flange (13) and the sealing ring (24) is firmly bonded to or vulcanized onto the first disc (21) and second disc (23).

7. Pivot-joint bearing according to Claim 6, characterized in that the first disc is divided radially into an inner disc (19) and an outer disc (21), in that the outer disc (21) is firmly bonded to or vulcanized onto the sealing ring (24) with an overhang radially inwards, in that the sliding surface for the flange (13) or the plastic disc (16) is formed on the inner disc (19) and the outer rim (22) of the disc (19) is designed in such a way that it engages behind the inner overhang of the outer disc (21) from the side facing away from the thrusting ring (17, 18), and in that the thrusting ring (17, 18) extends to such an extent in the radial direction that it covers over this overlapping region with its thrusting surface, so that when the prestressing is applied the outer disc (21) is clamped and held between the rim (22) of the inner disc (19) and the thrusting ring (17, 18).

8. Pivot-joint bearing according to one of Claims 1 to 7, characterized in that intermediate plates (14) are moulded-in in the flange (13) and/or in the longitudinal region of the bush (4, 5).

## Revendications

1. Articulation (1), en particulier pour le montage articulé d'une bielle d'essieu d'un véhicule automobile, se composant
d'une partie intérieure métallique cylindrique (2) (première partie de l'articulation), munie de bras de fixation (7, 8),
de deux douilles (4, 5) en matière élastomère, qui sont montées symétriquement face à face sur la partie intérieure et à l'extrémité frontale de chacune desquelles est formée une collerette (13),
d'un oeil de montage (3) (seconde partie de l'articulation) présentant une forure cylindrique par laquelle l'oeil de montage (3) est glissé sur les deux douilles (4, 5),
d'anneaux d'appui ou de pression (17, 18) qui sont appliqués latéralement contre les collerettes (13) et par lesquels est effectué, par resserrement axial, la fixation des douilles (4, 5), de telle manière que les deux douilles (4, 5) qui, à l'état non resserré, dépassent axialement de l'oeil de montage (3) ou de la forure cylindrique de celui-ci, soient serrées axialement l'une vers l'autre par les anneaux de pression (17, 18), ce qui fait que la matière élastomère est refoulée et précontrainte dans l'espace annulaire entre l'oeil de montage (3) et la partie intérieure cylindrique (2) et que les collerettes (13) sont pressées contre des surfaces frontales d'appui de l'oeil de montage (3),
caractérisée
en ce que les deux douilles (4, 5) comportent chacune un tube intérieur de glissement (12) qui entoure avec possibilité de glissement la partie intérieure (2) et sur lequel est solidement fixée une couche extérieure d'élastomère,
en ce que les surfaces frontales d'appui respectives des deux collerettes (13) des douilles (4, 5) entourant la partie intérieure (2) sont réalisées chacune sous forme de surface de glissement (disque de matière plastique 16) également susceptible de glisser, qui est unie sans possibilité de rotation à la matière élastomère de la collerette (13) associée,
en ce que sur chacune de ces surfaces de glissement (disque de matière plastique 16), un premier disque (19, 21) en matière dure s'appuie latéralement par une surface de glissement, premier disque qui dépasse en direction radiale la collerette (13) associée par une partie saillante (partie de disque 21) et sur lequel agit l'anneau d'application ou de pression (18, 17) pour exercer la précontrainte,
en ce qu'un second disque (23) en matière dure est inséré sans possibilité de rotation entre chaque collerette (13) et la surface frontale d'appui de l'oeil de montage (3), ce second disque (23) dépassant radialement lui aussi la collerette (13) associée par une partie saillante, de sorte qu'un espace est formé entre les parties saillantes du premier disque (partie de disque 21) et du second disque (23) correspondant,
en ce que de la matière élastomère est placée dans cet espace en tant qu'anneau d'étanchéité (24) et est unie aux deux disques pour former un élément de fermeture hermétique, de sorte que ledit espace soit fermé en anneau et que la région des collerettes (13) et des surfaces de glissement soit protégée et isolée hermétiquement de l'extérieur.

2. Articulation selon la revendication 1, caractérisée en ce que la matière élastomère est un caoutchouc.

3. Articulation selon la revendication 1 ou 2, caractérisée en ce que le tube de glissement (12) est en matière plastique et les surfaces de glissement latérales sur les collerettes (13) sont des disques de matière plastique qui sont fixés aux collerettes (13).

4. Articulation selon l'une quelconque des revendications 1 à 3, caractérisée en ce que le premier disque (19, 21) et le second disque (23) sont fabriqués en métal.

5. Articulation selon l'une quelconque des revendications 1 à 4, caractérisée en ce que le premier disque (19) présente un creux annulaire (20) dans lequel la surface de glissement ou disque de matière plastique (16) de chaque collerette (13) est emboîté et bordé des deux côtés en direction radiale.

6. Articulation selon l'une quelconque des revendications 1 à 5, caractérisée en ce que le second disque (23) est fixé ou uni par vulcanisation à la collerette (13) et l'anneau d'étanchéité (24) l'est au premier disque (21) et au second disque (23).

7. Articulation selon la revendication 6, caractérisée en ce que le premier disque est divisé radialement en un disque interne (19) et un disque externe (21),
en ce que le disque externe (21) est fixé ou uni par vulcanisation à l'anneau d'étanchéité (24) et dépasse celui-ci vers l'intérieur en direction radiale par une partie saillante,
en ce que la surface de glissement pour la collerette (13) ou pour le disque de matière plastique (16) est formée sur le disque interne (19) et le bord extérieur (22) du disque (19) est réalisé avec une forme telle qu'il saisisse par derrière, du côté situé à l'opposé de l'anneau de pression (17, 18), la partie saillante intérieure du disque externe (21), et
en ce que l'anneau de pression (17, 18) s'étend en direction radiale dans une mesure suffisante pour qu'il recouvre, par sa surface de pression, cette région de chevauchement, de sorte que, lorsque la précontrainte est exercée, le disque externe (21) soit pincé et maintenu entre le bord (22) du disque interne (19) et l'anneau de pression (17, 18).

8. Articulation selon l'une quelconque des revendications 1 à 7, caractérisée en ce que des plaques de métal intermédiaires (14) sont incluses par moulage dans la collerette (13) et/ou dans la partie longitudinale des douilles (4, 5).
